Europäisches Patentamt

European Patent Office

Office européen des brevets

(19)

(11) Numéro de publication : **0 203 964**
**B1**

(12)

# FASCICULE DE BREVET EUROPÉEN

(45) Date de publication du fascicule du brevet :
**15.03.89**

(21) Numéro de dépôt : **85906074.1**

(22) Date de dépôt : **03.12.85**

(86) Numéro de dépôt international :
**PCT/FR 85/00348**

(87) Numéro de publication internationale :
**WO/8603432 (19.06.86 Gazette 86/13)**

(51) Int. Cl.⁴ : **B 05 B   3/10**, A 01 M   7/00

(54) APPAREIL DE PULVERISATION CENTRIFUGE.

(30) Priorité : **05.12.84 FR 8418684**

(43) Date de publication de la demande :
**10.12.86 Bulletin 86/50**

(45) Mention de la délivrance du brevet :
**15.03.89 Bulletin 89/11**

(84) Etats contractants désignés :
**DE FR GB IT NL**

(56) Documents cités :
**EP—A— 0 055 948**
**US—A— 3 039 890**
**US—A— 3 939 521**
**US—A— 4 009 967**

(73) Titulaire : **BIDON, Daniel**
**Verdon**
**F-51210 Montmirail (FR)**

**GARET, Joelle**
**6, rue St-Crépin**
**F-02400 Chateau-Thierry (FR)**

(72) Inventeur : **BIDON, Daniel**
**Verdon**
**F-51210 Montmirail (FR)**
Inventeur : **GARET, Joelle**
**6, rue St-Crépin**
**F-02400 Chateau-Thierry (FR)**

(74) Mandataire : **Gérardin, Robert Jean René et al**
**Cabinet Robert Gérardin 3A, avenue Georges Clé-**
**menceau Boîte Postale 2 719**
**F-51055 Reims Cédex (FR)**

Jouve, 18, rue St-Denis, 75001 Paris, France

EP 0 203 964 B1

## Description

L'invention concerne un appareil de pulvérisation centrifuge à rotor creux, à tuyau adducteur fixe et à carter sectoriel.

Il existe actuellement divers appareils permettant la pulvérisation de liquides, en vue de leur répartition ou de leur projection sur des surfaces déterminées. De tels appareils sont utilisés dans l'industrie, pour l'enduction de surface, et, en agriculture, pour le traitement des cultures ou des sols.

En agriculture, les utilisateurs recherchent généralement, à épandre un volume de liquide très faible par unité de surface, afin d'obtenir une efficacité suffisante au moindre coût. La pulvérisation la plus fine est obtenue actuellement par des appareils à buse ou à disques rotatifs. On connaît déjà des appareils correspondant totalement ou partiellement au préambule de la revendication 1. Ces appareils sont décrits dans les brevets :

— Français, FR.A 2.174.583 concernant un appareil pour pulvériser finement un liquide, qui se caractérise principalement en ce qu'il comprend plusieurs anneaux, montés coaxialement, entraînés en rotation, et un tuyau adducteur qui débouche dans l'espace enveloppé par les anneaux.

— Etats-Unis d'Amérique n° 3 039 890 concernant une méthode et un appareil pour peinture électrostatique mettant en œuvre un rotor creux à tuyau adducteur fixe, muni d'orifices radiaux débouchant entre des fils électrodes implantés à la périphérie dudit rotor.

— Européen n° 0055948, concernant une installation pour la pulvérisation d'un liquide de traitement, notamment de traitement de cultures ou de sols, comportant au moins une buse rotative sur la partie centrale de laquelle un ajutage projette le liquide à pulvériser, prélevé par une pompe dans un réservoir, caractérisé en ce qu'un collecteur, en forme de secteur d'anneau d'angle fixe ou réglable, est fixé le long du pourtour de la buse rotative, sans contact avec elle, de façon à intercepter le liquide pulvérisé dans le secteur correspondant, avec récupération par un collecteur en forme de gouttière et renvoi au réservoir par une pompe. En débit proportionnel à l'avancement la buse a tendance à s'engorger avec un débit qui augmente, alors que la vitesse devrait varier avec le débit.

— Etats-Unis d'Amérique n° 4.009.967 concernant un véhicule de lavage de rues ou de parking dont le dispositif de pulvérisation à coupelle tournante, est entouré d'un carter sectoriel.

— US-A-3.939.521 ayant servi de base pour le préambule de la revendication 1.

Sur ces appareils, le diamètre des gouttelettes varie en fonction de la vitesse de rotation de la buse ou des disques, ce qui permet de déterminer le nombre de gouttelettes épandues par unité de surface.

Avec l'appareil décrit dans le brevet français FR.A-2.174.583 la pulvérisation s'effectue sur 360° et il en résulte un manque de précision dans l'épandage qui se traduit par du gaspillage de produit, alors, qu'avec l'appareil décrit dans le brevet européen 0055948, la pulvérisation s'effectue selon un secteur déterminé, grâce à la présence d'un collecteur en forme de secteur d'anneau dont il est équipé et au recyclage de la quantité de produit projetée dans le secteur parasite.

Toutefois, ces appareils ne permettent d'atteindre, malgré leur conception centrifuge, que des diamètres de gouttelettes de 25 microns au minimum et, dans le domaine agricole que des épandages minimum d'environ 40 litres par hectare.

La présente invention a pour but de remédier aux inconvénients présentés par les appareils précédemment évoqués. L'invention, telle qu'elle est caractérisée dans la partie caractérisante de la revendication 1, résout le problème consistant à créer un appareil capable de pulvériser omnidirectionnellement ou sectoriellement des liquides, chargés ou non, en gouttelettes très fines, de diamètre et de répartition réglables, à assez grande vitesse.

Comme il ressort de cette partie caractérisante, cet appareil est tel que les perforations radiales sont constituées de conduits évasés vers l'extérieur sur tout ou partie de leur longueur, la paroi intérieure du rotor étant munie d'un relief hélicoïdal.

Le liquide projeté contre un carter sectoriel est récupéré dans une gouttière puis recyclé dans la cavité intérieure du rotor par l'intermédiaire d'un petit réceptacle et d'une tuyauterie.

Plusieurs appareils peuvent être associés longitudinalement ou/et latéralement. Les rotors creux sont entraînés en rotation par l'intermédiaire d'arbres flexibles, à partir d'un moteur ou d'une prise de mouvement commune.

Les avantages obtenus grâce à cette invention consistent essentiellement en ceci, qu'elle permet d'obtenir des diamètres de gouttelettes inférieurs à 25 microns, une projection très précise, et, dans le domaine agricole, des épandages de 1 à 25 litres à l'hectare à des vitesses de 20 à 70 km/heure, par voie aérienne, et 20 à 40 km/heure, par voie terrestre, en utilisant des équipements agraires classiques.

En pulvérisation agricole cet appareil offre l'avantage de s'adapter à tous les appareils existants ; ce qui permet d'utiliser leur système de pompage et de régulation sans aucune modification.

Il permet la pulvérisation en bas volume (25 à 50 litres/hectare) et l'ultra-bas volume (5 à 25 litres/hectare).

Son débit est proportionnel à l'avancement, sans qu'il soit nécessaire de faire varier la vitesse de rotation du rotor, et il permet le passage de liquides chargés tels que, par exemple, les poudres mouillables.

La possibilité d'orienter la tête de pulvérisation permet de localiser la projection en fonction du besoin ; d'autant que le carter sectoriel limite de façon très précise cette projection, tout en permettant le recyclage direct des égouttures dans la cavité intérieure du rotor.

Cet appareil est alimenté sans pression, ce qui permet sa mise en œuvre par des aéronefs ultra légers motorisés.

L'invention est exposée ci-après plus en détail à l'aide de dessins représentant seulement un mode d'exécution :

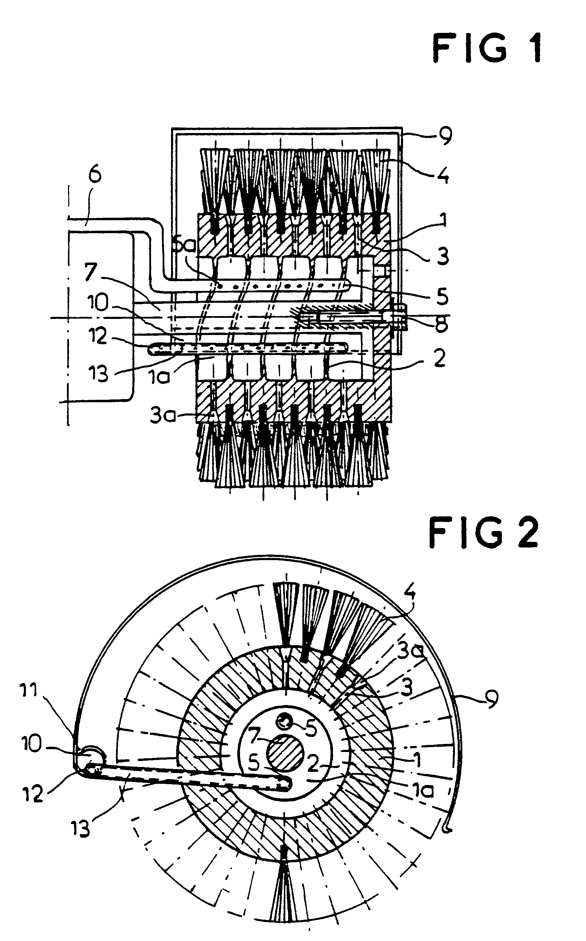

La figure 1 représente, une vue en coupe longitudinale de l'appareil.

La figure 2 représente, une vue de l'arrière de l'appareil, montrant le dispositif de récupération des égouttures dont est équipé le carter sectoriel.

En examinant les figures du dessin, on remarque que le rotor de pulvérisation 1 comporte, sur la paroi de sa cavité centrale 1a, un relief hélicoïdal 2, dans le fond de filet duquel sont réalisés des conduits cylindriques 3 dont l'orifice de sortie 3a est évasé en forme de tronc de cône, faisant communiquer ladite cavité centrale 1a avec l'extérieur, et débouchant entre les rangées de touffes 4 de tiges souples analogues à des poils de brosse. La cavité centrale 1a du rotor est alimentée en liquide à pulvériser par l'intermédiaire d'une buse 5, percée d'orifices 5a, reliée par une tuyauterie 6 au réservoir de produit. Le rotor est fixé à l'extrémité de son arbre d'entraînement 7 par une vis 8.

Le carter sectoriel 9 est muni, sur l'un de ses côtés, d'une gouttière 10 ne laissant subsister qu'une fente longitudinale 11, entre son rebord et la paroi interne dudit carter. Cette fente 11 est limitée à la longueur du rotor 1 afin de constituer, à l'une de ses extrémités, un petit réceptacle 12 se déversant dans la cavité centrale du rotor par l'intermédiaire du conduit de recyclage 13. La position de la gouttière 10 et le pas du relief hélicoïdal 2 sont déterminés en fonction du sens de rotation du rotor, de façon à obtenir respectivement, la récupération.de la totalité des égouttures et, à l'intérieur de la cavité centrale du rotor, un gradient de pression favorable à l'aspiration et au recyclage desdites égouttures.

Conformément à la présente invention, le liquide, amené à très faible pression par la tuyauterie 6, s'écoule, par la buse 5, à l'intérieur de la cavité centrale 1a du rotor 1, où il est aspiré et entraîné, par le relief hélicoïdal, à l'entrée des conduits 3, qu'il traverse par centrifugation pour s'écouler entre les rangées de touffes 4, qui assurent sa dispersion et sa projection.

Les touffes 4, de tiges souples, sont, de préférence, disposées en quinconce, selon un alignement longitudinal, de façon à favoriser leur action dynamique sur les gouttelettes de liquides sortant des conduits.

Le carter sectorial 9, permet de maîtriser l'angle de projection en fonction des besoins et de récupérer les gouttelettes ainsi retenues en vue de leur recyclage immédiat.

La position du réceptacle 12 et la dépression assurée à l'entrée de la cavité centrale 1a permettent le recyclage du liquide en position verticale ou oblique, comme en position horizontale.

L'appareil, selon l'invention, est destiné à la projection de tous liquides chargés ou non, pour l'enduction, la diffusion, l'épandage ou l'humidification.

**Revendications**

1. Appareil de pulvérisation centrifuge à rotor creux perforé radialement, à tuyau adducteur fixe, dont le rotor est muni, à sa périphérie, de tiges rigides ou souples, les tiges implantées à la périphérie du rotor (1) étant réparties en touffes (4) et en lignes, caractérisé en ce que l'appareil comprend un carter sectoriel muni sur l'un au moins de ses bords, de gouttières de récupération et de recyclage, en ce que les perforations radiales du rotor sont constituées de conduits (3) évasés vers l'extérieur sur tout ou partie de leur longueur, en ce que le recyclage du liquide, récupéré dans la gouttière (10), s'effectue par l'intermédiaire d'un petit réceptacle (12) et d'une tuyauterie (13), et en ce que la paroi de la cavité centrale (1a) est munie d'un relief hélicoïdal (2).

2. Appareil de pulvérisation selon la revendication 1, caractérisé en ce que plusieurs appareils peuvent être associés longitudinalement ou/et latéralement.

3. Appareil de pulvérisation selon la revendication 1, caractérisé en ce que les rotors creux (1) sont entraînés en rotation par l'intermédiaire d'arbres flexibles.

**Claims**

1. Centrifugal spraying device with radially perforated hollow rotor with fixed feeder pipe the rotor of which is fitted on its periphery with either rigid or flexible rods, the rods planted on the rotor (1) periphery being distributed in clusters (4) and in lines, featured wherein the device includes a sectorial casing equipped on one at least of its edges, of recovery or recirculation troughs, wherein the rotor radial perforations are constituted of conduits (3) flared outwards on whole or part of their length, wherein the recycling of the liquid recovered in the trough (10) is made through a small receptacle (12) and pipes (13) and wherein the wall of the central cavity (1a) is fitted with an helical relief (2).

2. Spraying device according to claim 1, featured wherein several devices may be associated longitudinally and/or laterally.

3. Spraying device according to claim 1, featured wherein the hollow rotors (1) are driven in rotation through flexible shafts.

**Patentansprüche**

1. Zentrifugalsprühgerät mit hohlem, radial gebohrtem Rotor mit festem Zuführungsrohr, dessen Rotor am Umfang mit starren bzw. biegsamen Stangen versehen ist, wobei die am Rotorumfang (1) angeordneten Stangen büschel- (4) und reihenweise verteilt sind, dadurch gekennzeichnet, daß das Gerät ein Sektorgehäuse umfaßt, das an mindestens einem Rand mit Rückgewinnungs- und Wiederverwertungsrinnen versehen ist, daß die Radialbohrungen am Rotor aus Leitungen (3) bestehen, die über ihre ganze Länge oder über nur eine Teillänge nach außen konisch erweitert sind, daß die Wiederverwertung der in der Rinne (10) zurückgewonnenen Flüssigkeit über einen kleinen Behälter (12) und eine Rohrleitung (13) erfolgt, sowie daß die Wand des mittleren Raums (1a) mit einer schraubenförmig erhabenen Fläche (2) versehen ist.

2. Sprühgerät nach Anspruch 1, dadurch gekennzeichnet, daß mehrere Sprühgeräte längs und/oder seitlich kombiniert werden können.

3. Sprühgerät nach Anspruch 1, dadurch gekennzeichnet, daß die hohlen Rotoren (1) über biegsame Wellen drehend angetrieben werden.

# FIG 1

# FIG 2